# FASCICULE DE BREVET EUROPEEN

(11) **EP 2 667 574 B1**
(45) Date de publication et mention de la délivrance du brevet: **05.09.2018**
(21) Numéro de dépôt: 13354018.7
(22) Date de dépôt: 21.05.2013
(51) Int. Cl.: H04L 29/08, H04L 29/06

(54) **Procédé et dispositif de sécurisation d'échange de messages transmis dans un réseau d'interconnexions**
Sicherungsverfahren und -vorrichtung für den Austausch von Mitteilungen, die über ein Verbundnetz übertragen werden
Method and device for securing the exchange of messages transmitted in an interconnection network

(30) Priorité: 21.05.2012 FR 1201433
(43) Date de publication de la demande: 27.11.2013
(73) Titulaire: Deny All, 92310 Sèvres (FR)
(72) Inventeur: Leblanc, Raphaël, 34000 Montpellier (FR)
(74) Mandataire: Talbot, Alexandre

(56) Documents cités:
- US-A1- 2005 273 850
- US-A1- 2006 195 899
- US-A1- 2007 005 766
- US-A1- 2010 228 962

## Description

### Domaine technique de l'invention

L'invention concerne la sécurisation d'échange de messages transmis dans un réseau d'interconnexions, et en particulier l'échange de messages entre des applications logicielles du type service internet.

### État de la technique

Les réseaux d'interconnexions sont des moyens de transmission de messages entre différents équipements émetteurs ou destinataires, tels des ordinateurs, des téléphones mobiles, de manière générale des composants électroniques ou informatiques de communication, des sites du réseau internet ou d'un réseau local du type intranet, etc. Certains équipements destinataires comprennent des applications logicielles du type service internet, notées services internet ou « Web Services » en langue anglaise. Les services internet permettent à un utilisateur de consommer des données et des fonctionnalités logicielles à distance, c'est-à-dire provenant d'une application logicielle stockée sur un équipement du type serveur, sans avoir à développer l'application logicielle en local. Ainsi, l'utilisateur peut bénéficier des améliorations d'une application logicielle développée ou maintenu par un tiers. Les services internet comprennent des programmes informatiques et permettent la communication et l'échange de données entre applications. Chaque service internet comprend un ensemble de fonctionnalités dont certaines règles de fonctionnement sont publiées de façon que les utilisateurs puissent les consulter afin de pouvoir paramétrer leurs messages destinés à consommer les données d'un service internet spécifique.

L'ensemble des règles de fonctionnement forme une politique de fonctionnement, notée également dictionnaire du service internet, qui peut être publiée sous la forme d'un fichier informatique. En particulier, un service internet comporte des règles de sécurité concernant la sécurisation de l'échange des messages, qui peuvent être publiques ou non.

Par exemple, un service internet peut être une application météorologique comprenant des fonctionnalités spécifiques pour collecter et effectuer des calculs sur des données météorologiques de différents pays. L'application météorologique appartient à un serveur de services internet, elle est considérée comme une application locale au serveur. Par exemple, un utilisateur peut utiliser une application distante de gestion de voyage et avoir besoin d'utiliser des données de l'application météorologique sans pour autant avoir à développer lui-même une telle application. Pour cela, l'utilisateur récupère le dictionnaire public comprenant l'ensemble des règles de fonctionnement de l'application météorologique pour configurer des messages destinés à consommer les données météorologiques. Ainsi, l'application météorologique reste locale au serveur, et l'utilisateur consomme uniquement les données mises à disposition par le serveur.

Dès lors que les serveurs de services internet sont interconnectés, au sein d'un réseau local interne ou sur le réseau internet, des mesures de sécurité doivent être mises en place pour garantir l'intégrité des données sensibles des serveurs. Par exemple, il faut identifier les serveurs, valider le contenu des messages, contrôler les autorisations d'accès et le chiffrement des données, prévenir les attaques et abus, etc. On peut ajouter des équipements de type pare-feu, ou firewall en langue anglaise, ayant des fonctions de rupture du flux de messages, de normalisation, d'amplification et de vérification des messages. Pour être efficace, l'équipement pare-feu doit être configuré en tenant compte de tous les paramètres de sécurité de chacune des applications service internet. En général, l'équipement pare-feu comporte des règles de sécurité internes qui doivent être mises à jour régulièrement lors, notamment, de chaque modification d'une application service internet, Actuellement, on configure manuellement les équipements pare-feu. La multiplicité des services internet et leur complexité rend la sécurisation difficile, et il est donc utile de fournir un moyen automatisé pour configurer les équipements pare-feu.

On peut citer par exemple les demandes de brevet américain US 2005/0251853 et US 200910077615 qui décrivent des méthodes pour générer automatiquement des politiques de sécurité pour un service internet et pour vérifier la sécurité de la configuration d'un tel service internet. On peut aussi citer le brevet américain US 7,444,675 qui décrit une méthode pour définir un service internet dans laquelle on spécifie au moins un élément de sécurité d'un message émis à un fournisseur du service internet, et au moins un algorithme pour sécuriser un tel message. La demande de brevet américain US 2008/0244692 décrit, quant à elle, une méthode pour sélectionner la meilleure politique alternative d'un service internet pour transmettre et recevoir des messages. Mais ces méthodes n'utilisent aucunement un équipement pare-feu pour protéger les données sensibles du serveur qui héberge le service internet.

Le brevet américain US 7,698,398 décrit une méthode pour générer des services internet. Il décrit également une architecture comprenant des serveurs, des clients et des équipements pare-feu pour protéger les serveurs. Mais le document ne précise pas comment les équipements pare-feu sont configurés. En outre, il ne décrit pas comment les règles de sécurité internes de l'équipement pare-feu sont mises à jour.

On peut citer la demande de brevet américain US2010/0228962 qui divulgue un procédé de déchargement d'un chiffrement de données au sein d'un système d'ordinateurs, dans lequel un équipement de déchargement effectue un premier traitement pour chiffrer/déchiffrer des messages, puis transfert les messages à une passerelle qui les traite à partir de règles et qui communique un résultat du traitement à l'équipement de déchargement, ce dernier transmet ou non les messages aux destinataires selon le résultat communiqué. Mais la passerelle peut être bloquée par un flux de messages important.

La demande de brevet américain US 2004/0073811 divulgue un filtre de sécurité, pour un service internet, traitant des messages au format HTTP. Le filtre utilise des règles de configuration basées sur des expressions régulières afin d'intercepter toute attaque qui présente des configurations connues. En outre, le blocage des requêtes émises s'effectue par comparaison des expressions contenues dans la requête avec celles des règles de configuration connues. La comparaison est effectuée expression par expression et dans un ordre prédéterminé constant quelle que soit la requête. Mais le document ne précise pas comment les règles de configuration du filtre sont mises à jour. Un tel filtre n'est pas adapté pour gérer les nombreuses mises à jour des règles de sécurité des nombreux services internet.

Par ailleurs, la demande de brevet américain US 2003/0084350 décrit un système pour configurer des droits d'accès à des informations sensibles d'un service internet. Le système comprend un serveur qui comporte le service internet, des moyens de communication pour communiquer avec un client distant, un fichier courant de données de configuration fournissant les droits d'accès, un filtre, et un gestionnaire de contrôle d'accès. Dans un cas de changements de configuration demandés par le client, le serveur fournit le fichier courant de configuration au client, en utilisant de préférence le protocole de communication SOAP, ou Simple Object Access Protocol en langue anglaise. Les changements du fichier de configuration sont exclusivement effectués hors connexion par le client, et un fichier mis à jour par le client est signé via une information d'authentification, puis émis vers le serveur. Le filtre identifie et rejette les requêtes du client qui ne sont pas du type SOAP, et le gestionnaire de contrôle d'accès examine l'authentification des requêtes d'entrée. Lorsque les requêtes sont validées par le filtre et le gestionnaire, la requête du client est utilisée pour mettre à jour le fichier de configuration courant à partir du fichier mis à jour par le client. Mais il ne décrit pas comment autoriser ou non les requêtes d'un client lorsque les règles de fonctionnement du service internet changent. En outre, un canal de communication est ouvert entre le serveur et le client pour que le serveur puisse transmettre le fichier de configuration sensible, ce qui rend le serveur vulnérable à une attaque d'un client malveillant.

On peut citer en outre la demande de brevet américain US 2009/0007253 qui décrit une passerelle, ou un équipement pare-feu, utilisée dans un système de services internet pour traiter les messages à destination des services internet. En particulier, la passerelle comporte un filtre qui récupère séquentiellement des événements contenus dans les messages reçus afin d'analyser leur contenu. Par ailleurs, le filtre examine les données contenues dans le message et filtre les messages à partir des informations de sécurité spécifiées dans l'en-tête du type SOAP du message. Mais l'analyse du contenu d'un message est effectuée à partir des éléments de l'en-tête du message, il ne décrit pas comment la passerelle est configurée en fonction des modifications des services internet.

### Objet de l'invention

L'objet de l'invention consiste à remédier à ces inconvénients, et plus particulièrement à fournir un procédé et un dispositif de sécurisation pour protéger un réseau ayant de nombreux services internet.

Un autre objet de l'invention est de fournir un moyen simple et efficace pour autoriser ou non l'échange de messages au sein d'un flux de messages important tout en limitant le nombre de calculs et de comparaisons afin de ne pas ralentir la transmission des messages.

Un autre objet de l'invention est de fournir un procédé et un dispositif automatisés qui nécessitent un minimum d'interventions humaines, telles des opérations de mise à jour ou de paramétrage.

Selon un aspect de l'invention, il est proposé un procédé de sécurisation d'échange de messages transmis dans un réseau d'interconnexions comprenant un équipement émetteur de messages, au moins un équipement destinataire de messages, un équipement relais configuré pour transmettre les messages aux équipements destinataires, et un équipement pare-feu connecté à l'équipement relais, au moins un équipement destinataire comprenant au moins une application logicielle du type service internet, et l'équipement émetteur émettant à l'équipement pare-feu, un message d'initialisation pour initialiser une communication avec une application logicielle spécifique.

Le procédé comporte une authentification dans laquelle l'équipement relais émet à l'équipement pare-feu, un message d'autorisation contenant au moins un paramètre de sécurité déterminé à partir de l'application logicielle spécifique, et une confirmation dans laquelle l'équipement pare-feu établit un canal de communication entre l'équipement émetteur et l'application logicielle spécifique si chaque paramètre de sécurité autorise la communication et rejette le message d'initialisation sinon.

Ainsi, on fournit un procédé de sécurisation automatisé pour autoriser ou non un échange de messages entre un service internet d'un équipement distant et un équipement local. L'équipement pare-feu récupère un paramètre de sécurité déterminé en fonction des règles de sécurité du service internet, pour décider si un canal de communication peut être établit ou non. Grâce à un tel procédé, on s'affranchit de mettre à jour régulièrement les règles internes de l'équipement pare-feu. En effet, lorsque les règles de sécurité d'un service internet changent, ou lorsqu'un nouveau service internet est développé, l'équipement pare-feu conserve sa configuration d'origine tout en utilisant les nouvelles règles de sécurité. Un tel procédé est particulièrement adapté pour protéger les équipements destinataires, et en particulier l'équipement relais qui ne reçoit les messages émis qu'après autorisation. Ce qui permet avantageusement de protéger l'équipement relais d'être bloqué par un flux important de messages, malveillants ou non, destinés à paralyser le réseau local interne formé par l'interconnexion des équipements destinataires.

Chaque application logicielle du type service internet peut comprendre au moins une règle de sécurité, et lors de l'étape d'authentification, l'équipement relais reçoit les règles de sécurité de l'application spécifique et détermine au moins un paramètre de sécurité à partir d'au moins une règle de sécurité reçue.

Par ailleurs, au moins un équipement destinataire peut comprendre une liste des applications logicielles du type service internet, et au moins un paramètre de sécurité est déterminé pour interdire la communication si l'application logicielle spécifique n'existe pas dans la liste.

Lors de l'étape d'authentification, l'équipement pare-feu peut émettre à l'équipement relais, un message d'authentification comportant un paramètre de communication provenant du message d'initialisation, et au moins un paramètre de sécurité est déterminé à partir du résultat d'au moins une règle de sécurité de l'application logicielle spécifique appliquée au paramètre de communication.

L'équipement pare-feu peut en outre comporter des règles de sécurité internes, et lors de l'étape de confirmation, l'équipement pare-feu détermine si chaque paramètre de sécurité autorise la communication en fonction des règles de sécurité internes.

Selon un autre aspect de l'invention, il est proposé un dispositif de sécurisation d'échange de messages transmis dans un réseau d'interconnexions comprenant un équipement émetteur de messages et au moins un équipement destinataire de messages, le dispositif comprenant un équipement relais configuré pour transmettre les messages aux équipements destinataires et un équipement pare-feu connecté à l'équipement relais, au moins un équipement destinataire comprenant au moins une application logicielle du type service internet, et l'équipement émetteur émettant à l'équipement pare-feu, un message d'initialisation pour initialiser une communication avec une application logicielle spécifique.

L'équipement relais est configuré pour émettre à l'équipement pare-feu, un message d'autorisation contenant au moins un paramètre de sécurité déterminé à partir de l'application logicielle spécifique, et l'équipement pare-feu est configuré pour établir un canal de communication entre l'équipement émetteur et l'application logicielle spécifique si chaque paramètre de sécurité autorise la communication et pour rejeter le message d'initialisation sinon.

Chaque application logicielle du type service internet peut comprendre au moins une règle de sécurité, et l'équipement relais est configuré pour recevoir les règles de sécurité de l'application spécifique et pour déterminer au moins un paramètre de sécurité à partir d'au moins une règle de sécurité reçue.

Par ailleurs, au moins un équipement destinataire peut comprendre une liste des applications logicielles du type service internet, et l'équipement relais est configuré pour déterminer au moins un paramètre de sécurité de façon à interdire la communication si l'application logicielle spécifique n'existe pas dans la liste.

L'équipement pare-feu peut être configuré pour émettre à l'équipement relais, un message d'authentification comportant un paramètre de communication provenant du message d'initialisation, et l'équipement relais est configuré pour déterminer au moins un paramètre de sécurité à partir du résultat d'au moins une règle de sécurité de l'application logicielle spécifique appliquée au paramètre de communication.

L'équipement pare-feu peut comporter des règles de sécurité internes, et est configuré pour déterminer si chaque paramètre de sécurité autorise la communication en fonction des règles de sécurité internes.

### Description sommaire des dessins

D'autres avantages et caractéristiques ressortiront plus clairement de la description qui va suivre de modes particuliers de réalisation et de mise en oeuvre de l'invention donnés à titre d'exemples non limitatifs et représentés aux dessins annexés, dans lesquels :
- la figure 1, illustre schématiquement un dispositif de sécurisation d'échange de messages selon l'invention ; et
- la figure 2, illustre schématiquement les principales étapes d'un procédé de sécurisation d'échange de messages selon l'invention.

### Description détaillée

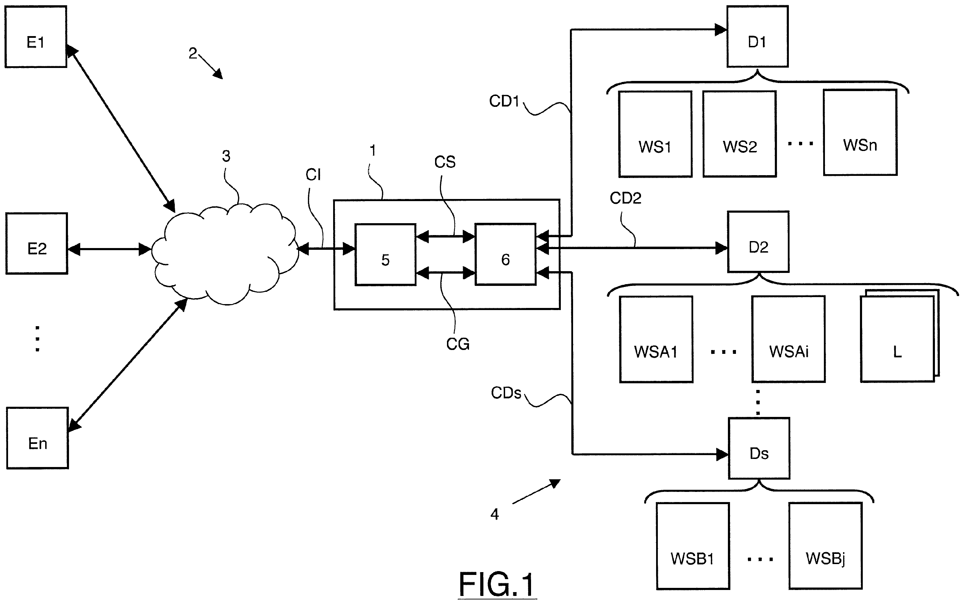

Sur la figure 1, on a représenté schématiquement un dispositif de sécurisation 1 d'échange de messages. Le dispositif de sécurisation 1 peut être un microprocesseur, ou un ensemble de microprocesseurs, ou encore être réalisé sous forme logicielle. Le dispositif de sécurisation 1 est situé au sein d'un réseau d'interconnexions 2 comprenant des équipements émetteurs E1 à En de messages et des équipements destinataires D1 à Ds de messages. Par exemple, les messages émis par les équipements émetteurs E1 à En transitent via un réseau internet 3, et les équipements destinataires D1 à Ds sont interconnectés au sein d'un réseau local interne 4. En variante, les équipements destinataires D1 à Ds peuvent être interconnectés au sein du réseau internet 3. De préférence, le dispositif de sécurisation 1 est situé entre le réseau internet 3 et le réseau local interne 4. Le dispositif de sécurisation 1 est configuré pour recevoir tous les messages émis par les équipements émetteurs E1 à En à destination des équipements destinataires D1 à Ds.

Chaque équipement destinataire D1 à Ds peut comporter un ou plusieurs services internet. Par exemple, le premier équipement destinataire D1 comprend plusieurs services internet WS1 à WSn, le deuxième équipement destinataire comprend plusieurs autres services internet WSA1 à WSAi, et le dernier équipement destinataire Ds comprend les services internet WSB1 à WSBj. Chaque service internet comprend une politique de fonctionnement ayant une ou plusieurs règles de fonctionnement. Chaque politique de fonctionnement est publique et peut être consultée par un utilisateur qui souhaite consommer les données et/ou les fonctionnalités d'un service internet spécifique. Une politique de fonctionnement d'un service internet, noté dictionnaire du service internet, est un fichier informatique pouvant être généré au format normalisé WSDL, ou Langage de Description des Services Internet, ou Web Services Description Language en langue anglaise. Chaque dictionnaire permet de décrire le protocole de communication utilisé, le format des messages requis pour communiquer avec le service internet, les méthodes à invoquer, la localisation du service internet. On peut citer par exemple le protocole de communication SOAP spécifique aux applications du type service internet. Le protocole SOAP est basé sur le protocole de transfert hypertexte HTTP, ou Hypertext Transfer Protocol en langue anglaise. En outre, les services internet utilisent généralement le langage de balisage extensible XML, ou Extensible Markup Language en langue anglaise. Un dictionnaire peut être localisé sur l'équipement destinataire qui comporte le service internet associé au dictionnaire, ou être disponible sur un autre équipement destinataire. En outre, chaque service internet comprend des règles de sécurité qui sont préférentiellement privées, c'est-à-dire qui ne sont pas accessibles par les équipements émetteurs E1 à En. Les règles de sécurité comportent des fonctionnalités destinées à autoriser ou non un échange de données entre un service internet et un équipement émetteur E1 à En. Les règles de sécurité sont des fonctionnalités logicielles stockées dans un fichier informatique propre. Par ailleurs, le dispositif de sécurisation 1 comporte une liste L des services internet accessibles aux équipements émetteurs E1 à En, en d'autres termes les services internet qui ont rendu publiques leurs règles de fonctionnement. La liste L des services internet est de préférence stockée par un équipement destinataire D2, ou peut être stockée sur le dispositif de sécurisation 1.

En variante, un équipement destinataire D1 à Ds peut comporter uniquement des règles de sécurité d'un service internet et des moyens pour transmettre des messages à un autre équipement destinataire qui comporte, quant à lui, les programmes informatiques, les données et les règles de fonctionnement du service internet. Selon encore une autre variante, un équipement destinataire peut comporter l'ensemble des règles de sécurité de chacun des services internet.

Le dispositif de sécurisation 1 comporte un équipement pare-feu 5 et un équipement relais 6. L'équipement pare-feu et l'équipement relais 6 peuvent être réalisés de façon logicielle, ou également sous la forme de circuits logiques, et peuvent être embarqués dans un ordinateur ou dans un microprocesseur. L'équipement relais 6 est connecté aux équipements destinataires D1 à Ds par l'intermédiaire de connexions CD1 à Cds pour échanger des messages. Par ailleurs, l'équipement relais 6 est connecté à l'équipement pare-feu 5 par l'intermédiaire d'une connexion spécifique CS et d'une connexion générale CG. La connexion spécifique CS est utilisée pour transmettre les messages qui sont échangés exclusivement entre l'équipement pare-feu 5 et l'équipement relais 6. La connexion générale CG est utilisée pour transmettre les autre messages, notamment les messages en provenance des équipements émetteurs E1 à En.

Par exemple, l'équipement relais 6 peut être une passerelle, ou gateway en langue anglaise, configurée pour gérer les échanges de messages entre les équipements destinataires D1 à Ds et l'équipement pare-feu 5. En variante, l'équipement relais 6 peut être un équipement destinataire spécifique parmi les équipements destinataires D1 à Ds. Dans ce cas, les messages en provenance de l'équipement pare-feu 5 sont reçus au préalable par l'équipement destinataire spécifique puis redirigés vers les équipements destinataires des messages.

L'équipement pare-feu 5 est connecté au réseau internet 3 par une connexion Cl et est configuré pour recevoir l'ensemble des messages émis par les équipements émetteurs E1 à Es. L'équipement pare-feu 5 est configuré pour d'une part analyser le contenu des messages reçus, et d'autre part pour autoriser ou non leur transmission en direction de l'équipement relais 6 via la connexion générale CG. En particulier, l'équipement pare-feu 5 intercepte chaque message en provenance des équipements émetteurs E1 à En, les redirige, via la connexion générale CG, vers l'équipement relais 6 en fonction d'une information qui autorise l'échange de messages, ou rejette les messages si l'information interdit l'échange. On dit alors qu'il y a une rupture du flux des messages émis par les équipements émetteurs E1 à En. Par défaut, le canal de communication CG entre l'équipement pare-feu et l'équipement relais 6 n'est pas ouvert, et aucun message ne transite entre les deux équipements 5, 6. La transmission des messages entre les équipements émetteurs E1 à En et l'équipement pare-feu 5 est de préférence asynchrone. On peut également envisager d'utiliser un échange de messages du type synchrone.

De manière générale, l'équipement pare-feu 5 reçoit un message d'initialisation provenant d'un équipement émetteur E1 qui requiert l'initialisation d'une communication avec un service internet spécifique WS1 afin de consommer des données et fonctionnalités du service WS1. Le message d'initialisation comprend au moins un identifiant du service internet spécifique WS1, et peut comprendre en outre un paramètre de communication. L'équipement pare-feu 5 met en attente le message d'initialisation, puis interroge l'équipement relais 6 pour savoir si l'échange est autorisé ou non. En particulier, l'équipement pare-feu 5 émet un message d'authentification, par la connexion spécifique CS, à destination de l'équipement relais 6. Le message d'authentification comprend au moins l'identifiant du service internet spécifique WS1 provenant du message d'initialisation, et éventuellement un paramètre de communication. Le message d'authentification est un nouveau message différent du message d'initialisation. De préférence, l'équipement pare-feu 5 émet un unique message à l'équipement relais 6 afin de diminuer les temps de calculs du pare-feu 5. Puis l'équipement relais 6 récupère les informations du message d'authentification et se connecte à l'équipement destinataire qui stocke les règles de sécurité associées au service internet spécifique WS1. Ensuite, l'équipement relais 6 récupère les règles de sécurité du service internet spécifique WS1, et utilise ces règles pour déterminer au moins un paramètre de sécurité. En outre, l'équipement relais 6 transmet chaque paramètre de sécurité à l'équipement pare-feu 5, via la connexion spécifique CS. De préférence, l'équipement relais 6 émet un unique message à l'équipement pare-feu 5 afin de diminuer les temps de calculs de l'équipement relais 6. Puis, l'équipement pare-feu 5 utilise chaque paramètre de sécurité transmis pour autoriser ou non l'échange de données. En outre, l'équipement pare-feu 5 peut comprendre un fichier spécifique comprenant des règles de sécurité internes à appliquer aux paramètres de sécurité émis par l'équipement relais 6 afin de déterminer si la communication est autorisée ou non. L'équipement pare-feu 5 établit ensuite un canal de communication, via la connexion générale CG, entre l'équipement émetteur E1 et le service internet WS1 si chaque paramètre de sécurité autorise la communication, et rejette le message d'initialisation sinon. Ainsi, on sépare la sécurisation entre l'équipement pare-feu 5 qui autorise ou non l'établissement d'un canal de communication entre émetteur et destinataire sans connaître explicitement les règles de sécurité des services internet, et l'équipement relais 6 qui applique les règles de sécurité sans être exposé au flux de messages. Une telle séparation permet, notamment, de protéger l'équipement relais 6 d'un flux de messages malveillant, et d'optimiser les temps de calculs de l'équipement pare-feu 5 nécessaires à l'analyse du contenu des messages reçus.

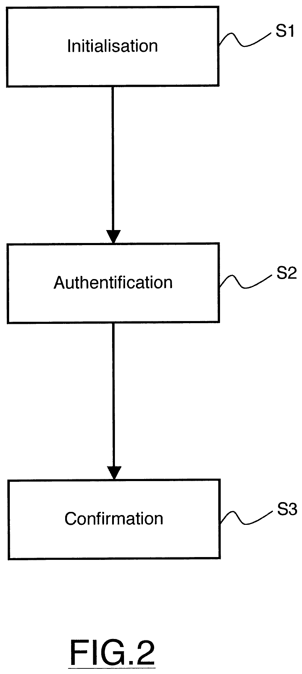

Sur la figure 2, on a représenté les principales étapes d'un procédé de sécurisation d'échange de messages. Le procédé peut être mis en oeuvre par le dispositif de sécurisation 1 décrit à la figure 1. Il peut être mis en oeuvre au sein d'un microprocesseur, ou d'un système comportant des circuits logiques, ou mis en oeuvre sous forme logicielle.

Le procédé comprend une première étape d'initialisation S1, dans laquelle l'équipement émetteur E1 émet le message d'initialisation destiné à établir une communication avec le service internet spécifique WS1. Lors d'une deuxième étape d'authentification S2, l'équipement pare-feu 5 récupère à partir du message d'initialisation, un identifiant du service internet spécifique WS1, et éventuellement un ou plusieurs paramètres de communication. Puis l'équipement pare-feu 5 interroge l'équipement relais 6 en lui transmettant un message d'authentification contenant l'identifiant et les paramètres de communication. Puis l'équipement relais 6 transmet au moins un paramètre de sécurité à l'équipement pare-feu 5, et lors d'une étape de confirmation S3, l'équipement pare-feu 5 établit un canal de communication entre l'équipement émetteur E1 et le service internet WS1 si chaque paramètre de sécurité autorise la communication, et rejette le message d'initialisation sinon.

Selon un mode de mise en oeuvre décrit ci-après, on considère l'exemple, dans lequel le message d'initialisation comporte un identifiant de service internet et un paramètre de communication identifiant le pays d'émission du message d'initialisation. Dans cet exemple, l'identifiant de service internet comprend l'information « WS1 » et le paramètre de communication comprend l'information « France ». Par ailleurs, le service internet WS1 comprend une règle de sécurité qui consiste à retourner l'information « Pays Européen » si le paramètre de communication comprend l'information « France » ; « Pays Asiatique » si le paramètre de communication comprend l'information « Japon » ; et « Inconnu » sinon. En outre, l'équipement pare-feu 5 comprend une règle interne qui consiste à interdire la communication si un paramètre de sécurité transmis comprend l'information « Pays Européen ».

Lorsqu'un équipement émetteur E1 à En souhaite consommer des données d'un service internet spécifique WS1, il émet, préalablement par l'intermédiaire de la connexion Cl, un message d'initialisation à destination de l'équipement pare-feu 5. Le message d'initialisation permet d'initialiser une communication avec le service internet spécifique WS1. Le message d'initialisation est intercepté par l'équipement pare-feu 5, il n'est ni transmis aux équipements destinataires D1 à Ds, ni à l'équipement relais 6. Les règles de sécurité internes de l'équipement pare-feu 5 peuvent comprendre des règles de premier niveau, des règles de deuxième niveau, et des règles par défaut. Les règles de premier niveau sont indépendantes des règles de sécurité des services internet, et permettent à l'équipement pare-feu 5 d'autoriser ou non la communication à partir d'une analyse d'une partie du contenu du message d'initialisation, en particulier à partir d'une analyse de l'en-tête du message. Par exemple, les règles de premier niveau peuvent être basées sur des expressions régulières afin d'interdire un message qui présente une expression interdite. Les règles de deuxième niveau sont, quant à elles, associées aux règles de sécurité des services internes, et permettent à l'équipement pare-feu 5 d'autoriser ou non la communication à partir des paramètres de sécurité émis par l'équipement relais 6. Par ailleurs, les règles par défaut permettent à l'équipement pare-feu 5 d'autoriser ou d'interdire la communication si aucune des règles précédentes n'a donné un résultat utilisable. En d'autres termes, l'équipement pare-feu 5 analyse le message d'initialisation à partir des règles internes de premier niveau. Si le résultat provenant de l'application des règles de premier niveau n'entraîne pas de décision, d'interdiction ou d'autorisation, l'équipement pare-feu 5 interroge l'équipement relais 6 pour récupérer au moins un paramètre de sécurité et utilise les règles de deuxième niveau. Si le résultat provenant de l'application des règles de deuxième niveau n'entraîne pas de décision, d'interdiction ou d'autorisation, l'équipement pare-feu 5 applique les règles par défaut.

En outre, l'équipement pare-feu 5 récupère un identifiant du service internet spécifique WS1 contenu dans le message d'initialisation. L'équipement pare-feu 5 peut également récupérer un ou plusieurs paramètres de communication du message d'initialisation, par exemple un identifiant du pays d'émission du message, ou encore un identifiant de la langue du message d'initialisation. Dans l'exemple décrit ci-avant, l'équipement pare-feu 5 récupère l'identifiant de service internet « WS1 » et le paramètre de communication « France ». Ensuite, l'équipement pare-feu 5 émet, via la connexion spécifique CS, à destination de l'équipement relais 6, un message d'authentification contenant l'identifiant du service internet spécifique « WS1 » et le paramètre de communication « France ». On peut également envisager le cas où l'équipement pare-feu 5 ne transmet aucun paramètre de communication, et l'équipement relais 6 transmet alors un paramètre de sécurité déterminé à partir d'une règle de sécurité par défaut du service internet spécifique WS1. Avantageusement, le message d'authentification contient en outre un ou plusieurs paramètres de communication. L'équipement relais 6 reçoit le message d'authentification et extrait l'identifiant de service internet « WS1 » et le paramètre de communication « France ». L'équipement relais 6 détermine, à partir de la liste des services internet L si le service internet spécifique WS1 demandé par l'équipement émetteur E1 existe. Si le service internet n'est pas présent dans la liste, l'équipement relais 6 émet un message d'autorisation à l'équipement pare-feu 5, via la connexion spécifique CS, contenant un paramètre de sécurité pour interdire la communication, et continue le traitement du message d'authentification sinon. Lorsque le service internet spécifique demandé existe dans la liste L, l'équipement relais 6 se connecte à l'équipement destinataire qui contient les règles de sécurité associées au service internet spécifique WS1. L'équipement relais 6 récupère les règles de sécurité et détermine au moins un paramètre de sécurité en appliquant au moins une règle de sécurité reçue au paramètre de communication « France ». Dans l'exemple décrit ci-avant, l'équipement relais 6 détermine un paramètre de sécurité comportant l'information « Pays Européen ». En variante, l'équipement relais peut déterminer un unique paramètre de sécurité contenant le ou les résultats des règles de sécurité du service internet spécifique WS1 et/ou l'information de l'existence ou non du service internet WS1 dans la liste L. En particulier, l'équipement relais 6 peut déterminer plusieurs paramètres de sécurité à partir respectivement des règles de sécurité du service internet WS1. Puis l'équipement relais 6 transmet un message d'autorisation contenant le ou les paramètres de sécurité à l'équipement pare-feu 5. L'équipement pare-feu 5 récupère l'information « Pays Européen » et applique les règles de sécurité internes de deuxième niveau, qui entraîne une interdiction de communication et donc un rejet du message d'initialisation.

De manière générale, si chaque paramètre de sécurité autorise la communication, l'équipement pare-feu 5 établit un canal de communication temporaire par l'intermédiaire de la connexion générale CG. Le canal de communication permet de transmettre les messages entre l'équipement émetteur E1 et l'équipement relais 6 qui les redirige vers l'équipement destinataire qui stocke le service internet spécifique WS1. Le canal de communication est ensuite fermé lorsque la communication est terminée, par exemple lorsque l'équipement émetteur E1 a reçu tous les messages de l'équipement destinataire D1.

Ainsi on fournit un moyen automatisé pour sécuriser efficacement l'échange de données entre un équipement local et plusieurs services internet. Il n'est pas nécessaire que l'équipement pare-feu utilisé connaisse les nombreuses règles de sécurité des services internet. Il n'est donc pas nécessaire que l'équipement pare-feu télécharge les règles de sécurité pour assurer une protection rapide et efficace. Un tel procédé et un tel dispositif sont particulièrement adaptés à la sécurisation d'un réseau local comprenant de nombreux services internet, et en particulier lorsqu'on ajoute des services internet qui sont nouveaux et qui ont des nouvelles règles de sécurité.

## Revendications

1. Procédé de sécurisation d'échange de messages transmis dans un réseau d'interconnexions comprenant un équipement émetteur de messages, au moins un équipement destinataire de messages, un équipement relais configuré pour transmettre les messages aux équipements destinataires, et un équipement pare-feu connecté à l'équipement relais, au moins un équipement destinataire comprenant au moins une application logicielle du type service internet, et l'équipement émetteur émettant à l'équipement pare-feu, un message d'initialisation pour initialiser (S1) une communication avec une application logicielle spécifique, **caractérisé en ce qu'**il comporte une authentification (S2) dans laquelle l'équipement relais émet à l'équipement pare-feu, un message d'autorisation contenant au moins un paramètre de sécurité déterminé à partir de l'application logicielle spécifique, et une confirmation (S3) dans laquelle l'équipement pare-feu établit un canal de communication entre l'équipement émetteur et l'application logicielle spécifique si chaque paramètre de sécurité autorise la communication et rejette le message d'initialisation sinon.

2. Procédé selon la revendication 1, dans lequel chaque application logicielle du type service internet comprend au moins une règle de sécurité, et lors de l'étape d'authentification (S2), l'équipement relais reçoit les règles de sécurité de l'application spécifique et détermine au moins un paramètre de sécurité à partir d'au moins une règle de sécurité reçue.

3. Procédé selon la revendication 1 ou 2, dans lequel au moins un équipement destinataire comprend une liste des applications logicielles du type service internet, et au moins un paramètre de sécurité est déterminé pour interdire la communication si l'application logicielle spécifique n'existe pas dans la liste.

4. Procédé selon la revendication 2 ou 3, dans lequel, lors de l'étape d'authentification (S2), l'équipement pare-feu émet à l'équipement relais, un message d'authentification comportant un paramètre de communication provenant du message d'initialisation, et au moins un paramètre de sécurité est déterminé à partir du résultat d'au moins une règle de sécurité de l'application logicielle spécifique appliquée au paramètre de communication.

5. Procédé selon l'une des revendications 1 à 4, dans lequel l'équipement pare-feu comporte des règles de sécurité internes, et lors de l'étape de confirmation (S3), l'équipement pare-feu détermine si chaque paramètre de sécurité autorise la communication en fonction des règles de sécurité internes.

6. Dispositif de sécurisation d'échange de messages transmis dans un réseau d'interconnexions (2) comprenant un équipement émetteur de messages (E1) et au moins un équipement destinataire de messages (D1 à Ds), le dispositif comprenant un équipement relais (6) configuré pour transmettre les messages aux équipements destinataires (D1 à Ds) et un équipement pare-feu (5) connecté à l'équipement relais (6), au moins un équipement destinataire (D1 à Ds) comprenant au moins une application logicielle du type service internet (WS1 à WSn), et l'équipement pare-feu (5) étant configuré pour recevoir de l'équipement émetteur (E1), un message d'initialisation pour initialiser une communication avec une application logicielle spécifique (WS1), **caractérisé en ce que** l'équipement relais (6) est configuré pour émettre à l'équipement pare-feu (5), un message d'autorisation contenant au moins un paramètre de sécurité déterminé à partir de l'application logicielle spécifique (WS1), et l'équipement pare-feu (5) est configuré pour établir un canal de communication entre l'équipement émetteur (E1) et l'application logicielle spécifique (WS1) si chaque paramètre de sécurité autorise la communication et pour rejeter le message d'initialisation sinon.

7. Dispositif selon la revendication 6, dans lequel chaque application logicielle du type service internet (WS1 à WSn) comprend au moins une règle de sécurité, et l'équipement relais (6) est configuré pour recevoir les règles de sécurité de l'application spécifique (WS1) et pour déterminer au moins un paramètre de sécurité à partir d'au moins une règle de sécurité reçue.

8. Dispositif selon la revendication 6 ou 7, dans lequel au moins un équipement destinataire (D1 à Ds) comprend une liste (L) des applications logicielles du type service internet (WS1 à WSn), et l'équipement relais (6) est configuré pour déterminer au moins un paramètre de sécurité de façon à interdire la communication si l'application logicielle spécifique (WS1) n'existe pas dans la liste (L).

9. Dispositif selon la revendication 7 ou 8, dans lequel l'équipement pare-feu (5) est configuré pour émettre à l'équipement relais (6), un message d'authentification comportant le paramètre de communication provenant du message d'initialisation, et l'équipement relais (6) est configuré pour déterminer au moins un paramètre de sécurité à partir du résultat d'au moins une règle de sécurité de l'application logicielle spécifique (WS1) appliquée au paramètre de communication.

10. Dispositif selon l'une des revendications 6 à 9, dans lequel l'équipement pare-feu (5) comporte des règles de sécurité internes, et est configuré pour déterminer si chaque paramètre de sécurité autorise la communication en fonction des règles de sécurité internes.

## Patentansprüche

1. Sicherungsverfahren für den Austausch von in einem Verbindungsnetz übertragenen Nachrichten, das eine Vorrichtung zum Versenden von Nachrichten umfasst, sowie mindestens eine Nachrichten-Empfangsvorrichtung, eine Relaisvorrichtung, die so konfiguriert ist, dass sie die Nachrichten an die Empfangsvorrichtungen überträgt, und eine Firewall-Einrichtung, die an die Relaisvorrichtung angeschlossen ist, mindestens eine Empfangsvorrichtung, die mindestens eine Software-Anwendung nach Art eines Internetservices umfasst, und wobei die Sendevorrichtung der Firewall-Einrichtung eine Initialisierungsnachricht zur Initialisierung (S1) einer Kommunikation mit einer spezifischen Software-Anwendung schickt, **dadurch gekennzeichnet, dass** es eine Authentifizierung (S2) umfasst, bei der die Relaisvorrichtung an die Firewall-Einrichtung eine Autorisierungsnachricht schickt, die mindestens einen Sicherheitsparameter enthält, der von der spezifischen Software-Anwendung aus bestimmt wird, und eine Bestätigung (S3), bei der die Firewall-Einrichtung einen Kommunikationskanal aufbaut zwischen der Sendevorrichtung und der spezifischen Software-Anwendung, wenn jeder Sicherheitsparameter die Kommunikation erlaubt, und ansonsten die Initialisierungsnachricht verwirft.

2. Verfahren nach Anspruch 1, bei dem jede Software-Anwendung nach Art eines Internetservices mindestens eine Sicherheitsregel beinhaltet und die Relaisvorrichtung die Sicherheitsregeln der spezifischen Anwendung während des Authentifizierungsschritts (S2) empfängt und ausgehend von mindestens einer empfangenen Sicherheitsregel mindestens einen Sicherheitsparameter bestimmt.

3. Verfahren nach Anspruch 1 oder 2, bei dem mindestens eine Empfangsvorrichtung eine Liste der Software-Anwendungen nach Art eines Internetservices umfasst und mindestens ein Sicherheitsparameter bestimmt wird, um die Kommunikation zu unterbinden, wenn die spezifische Software-Anwendung nicht in der Liste enthalten ist.

4. Verfahren nach Anspruch 2 oder 3, bei dem im Authentifizierungsschritt (S2) die Firewall-Einrichtung an die Relaisvorrichtung eine Authentifizierungsnachricht sendet, die einen Kommunikationsparameter enthält, der aus der Initialisierungsnachricht stammt, und mindestens ein Sicherheitsparameter ausgehend von dem Ergebnis mindestens einer Sicherheitsregel der spezifischen Software-Anwendung bestimmt wird, die an den Kommunikationsparameter angelegt wird.

5. Verfahren nach einem der Ansprüche 1 bis 4, wobei die Firewall-Vorrichtung interne Sicherheitsregeln enthält und die Firewall-Vorrichtung im Bestätigungsschritt (S3) bestimmt, ob jeder Sicherheitsparameter die Kommunikation entsprechend den internen Sicherheitsregeln zulässt.

6. Vorrichtung zur Sicherung von in einem Verbindungsnetz übertragenen Nachrichten, die umfasst:
eine Vorrichtung zum Versenden von Nachrichten (E1) und mindestens eine Nachrichten-Empfangsvorrichtung (D1 ä Ds), wobei die Vorrichtung eine Relaisvorrichtung (6) umfasst, die so konfiguriert ist, dass sie die Nachrichten an die Empfangsvorrichtungen (D1 ä Ds) überträgt, und eine Firewall-Einrichtung (5), die an die Relaisvorrichtung (6) angeschlossen ist, mindestens eine Empfangseinrichtung (D1 ä Ds), die mindestens eine Software-Anwendung nach Art eines Internetservices (WS1 à WSn) umfasst, und die Firewall-Einrichtung so konfiguriert ist, dass sie von der Sendevorrichtung (E1) eine Initialisierungsnachricht zur Initialisierung (S1) einer Kommunikation mit einer spezifischen Software-Anwendung (WS1) schickt, **dadurch gekennzeichnet, dass** die Relaisvorrichtung (6) so konfiguriert ist, dass sie an die Firewall-Einrichtung (5) eine Autorisierungsnachricht schickt, die mindestens einen von der spezifischen Software-Anwendung (WS1) bestimmten Sicherheitsparameter enthält, und die Firewall-Einrichtung (5) so konfiguriert ist, dass sie einen Kommunikationskanal aufbaut zwischen der Sendevorrichtung (E1) und der spezifischen Software-Anwendung (WS1), wenn jeder Sicherheitsparameter die Kommunikation erlaubt, und ansonsten die Initialisierungsnachricht verwirft.

7. Vorrichtung nach Anspruch 6, bei der jede Software-Anwendung nach Art eines Internetservices (WS1 à WSn) mindestens eine Sicherheitsregel beinhaltet und die Relaisvorrichtung (6) so konfiguriert ist, dass sie die Sicherheitsregeln der spezifischen Anwendung (WS1) empfängt und ausgehend von mindestens einer empfangenen Sicherheitsregel mindestens einen Sicherheitsparameter bestimmt.

8. Vorrichtung nach Anspruch 6 oder 7, bei der mindestens eine Empfangsvorrichtung (D1 à Ds) eine Liste (L) der Software-Anwendungen nach Art eines Internetservices (WS1 à WSn) umfasst und die Relaisvorrichtung (6) so konfiguriert ist, dass sie mindestens einen Sicherheitsparameter bestimmt wird, um die Kommunikation zu unterbinden, wenn die spezifische Software-Anwendung (WS1) nicht in der Liste (L) enthalten ist.

9. Vorrichtung nach Anspruch 7 oder 8, bei der die Firewall-Einrichtung (5) so konfiguriert ist, dass sie an die Relaisvorrichtung (6) eine Authentifizierungsnachricht sendet, die einen Kommunikationsparameter enthält, der aus der Initialisierungsnachricht stammt, und die Relaisvorrichtung (6) so konfiguriert ist, dass sie mindestens einen Sicherheitsparameter ausgehend von dem Ergebnis mindestens einer Sicherheitsregel der spezifischen Software-Anwendung (WS1) bestimmt, die an den Kommunikationsparameter angelegt wird.

10. Vorrichtung nach einem der Ansprüche 6 bis 9, bei der die Firewall-Einrichtung (5) interne Sicherheitsregeln enthält und so konfiguriert ist, dass sie bestimmt, ob jeder Sicherheitsparameter die Kommunikation entsprechend den internen Sicherheitsregeln zulässt.

## Claims

1. Method for securing the exchange of messages transmitted in an interconnection network comprising a message transmitter unit, at least one message receiver unit, a relay unit configured to transmit the messages to the receiver units, and a firewall unit connected to the relay unit, at least one receiver unit comprising at least one software application of web service type, and the transmitter unit transmitting an initialisation message to the firewall unit to initialise (S1) a communication with a specific software application, **characterised in that** it comprises an authentication (S2) in which the relay unit transmits an authorisation message containing at least one security parameter determined from the specific software application to the firewall unit, and a confirmation (S3) in which the firewall unit establishes a communication channel between the transmitter unit and the specific software application if each security parameter authorises communication and rejects the initialisation message otherwise.

2. Method according to claim 1, wherein each software application of web service type comprises at least one security rule, and during the authentication step (S2), the relay unit receives the security rules of the specific application and determines at least one security parameter from at least one received security rule.

3. Method according to claim 1 or 2, wherein at least one receiver unit comprises a list of the software applications of web service type, and at least one security parameter is determined to prohibit communication if the specific software application does not exist in the list.

4. Method according to claim 2 or 3, wherein, in the authentication step (S2), the firewall unit transmits an authentication message comprising a communication parameter originating from the initialisation message to the relay unit, and at least one security parameter is determined from the result of at least one security rule of the specific software application applied to the communication parameter.

5. Method according to one of claims 1 to 4, wherein the firewall unit comprises internal security rules, and in a confirmation step (S3), the firewall unit determines whether each security parameter authorises communication in accordance with the internal security rules.

6. Device for securing the exchange of messages transmitted in an interconnection network (2) comprising a message transmitter unit (E1) and at least one message receiver unit (D1 to Ds), the device comprising a relay unit (6) configured to transmit the messages to the receiver units (D1 to Ds) and a firewall unit (5) connected to the relay unit (6), at least one receiver unit (D1 to Ds) comprising at least one software application of web service type (WS1 to WSn), and the firewall unit (5) being configured to receive an initialisation message from the transmitter unit (E1) to initialise a communication with a specific software application (WS1), **characterised in that** the relay unit (6) is configured to transmit to the firewall unit (5) an authorisation message containing at least one security parameter determined from the specific software application (WS1), and the firewall unit (5) is configured to establish a communication channel between the transmitter unit (E1) and the specific software application (WS1) if each security parameter authorises communication and to reject the initialisation message otherwise.

7. Device according to claim 6, wherein each software application of web service type (WS1 to WSn) comprises at least one security rule, and the relay unit (6) is configured to receive the security rules of the specific application (WS1) and to determine at least one security parameter from at least one received security rule.

8. Device according to claim 6 or 7, wherein at least one receiver unit (D1 to Ds) comprises a list (L) of the software applications of web service type (WS1 to WSn), and the relay unit (6) is configured to determine at least one security parameter so as to prohibit communication if the specific software application (WS1) does not exist in the list (L).

9. Device according to claim 7 or 8, wherein the firewall unit (5) is configured to transmit an authentication message comprising the communication parameter originating from the initialisation message to the relay unit (6), and the relay unit (6) is configured to determine at least one security parameter from the result of at least one security rule of the specific software application (WS1) applied to the communication parameter.

10. Device according to one of claims 6 to 9, wherein the firewall unit (5) comprises internal security rules and is configured to determine whether each security parameter authorises communication according to the internal security rules.
